# EUROPEAN PATENT APPLICATION

(11) **EP 4 576 876 A1**
(43) Date of publication of application: **25.06.2025**
(21) Application number: 23870333.4
(22) Date of filing: 13.09.2023
(51) Int. Cl.: H04W 36/08

(54) **CELL HANDOVER METHOD, BASE STATION, AND COMPUTER READABLE STORAGE MEDIUM**

(30) Priority: 30.09.2022 CN 202211212307
(71) Applicant: ZTE CORPORATION, Shenzhen, Guangdong 518057 (CN)
(72) Inventor: LI, Tengfei, Shenzhen, Guangdong 518057 (CN)
(74) Representative: Canzler & Bergmeier Patentanwälte Partnerschaft mbB
(86) International application number: PCT/CN2023/118554
(87) International publication number: WO 2024/067096

(57) **Abstract**

The present disclosure provides a cell handover method, comprising: acquiring a plurality of communication indicators between a serving cell and a terminal, and determining a service communication quality, the service communication quality representing the quality of communication between the serving cell and the terminal; and when the service communication quality is lower than a first standard and higher than a second standard, determining one neighboring cell as a destination cell of cell handover of the terminal, and sending a cell handover instruction to the terminal, the second standard being a standard that can ensure that the terminal receives a signal sent by a cell. The present disclosure further provides a base station and a computer readable storage medium.

## Description

### CROSS-REFERENCE TO RELATED APPLICATION

The present disclosure claims the priority of Chinese Patent Application No. 202211212307.9, filed on September 30, 2022, the contents of which are incorporated herein in their entirety by reference.

### TECHNICAL FIELD

The present disclosure relates to the field of cell handover technology, and in particular, to a cell handover method, a base station, and a computer-readable storage medium.

### BACKGROUND

In a mobile communication system, such as a 3GPP (3rd Generation Partnership Project) mobile communication system, a terminal may move to a different cell, so that it is necessary to change a cell serving the terminal as the terminal moves, that is, a cell handover is required, to ensure that a continuous communication service is provided for the terminal. Therefore, a success rate of the cell handover is one of the key indicators for measuring the performance and the service quality of the communication network.

However, in some related technologies, a cell handover process is prone to failure, which results in a relatively high failure rate of the handover and reduced service quality.

### SUMMARY

In a first aspect, an embodiment of the present disclosure provides a cell handover method, including: acquiring a plurality of communication indicators between a serving cell and a terminal, to determine a service communication quality, the service communication quality representing a quality of communication between the serving cell and the terminal; and determining a neighboring cell as a destination cell for a cell handover of the terminal, and sending a cell handover instruction to the terminal, in response to that the service communication quality is lower than a first standard and higher than a second standard, the second standard being a standard for ensuring a signal sent by the serving cell to be receivable by the terminal.

In a second aspect, an embodiment of the present disclosure provides a base station, including at least one memory, and at least one processor; the memory stores a computer program to be executed by the at least one processor, the computer program, when executed by the at least one processor, causes the at least one processor to implement the cell handover method provided by the present disclosure.

In a third aspect, an embodiment of the present disclosure provides a computer-readable storage medium, storing thereon a computer program which, when executed by a processor, causes the processor to implement the cell handover method provided by the present disclosure.

### BRIEF DESCRIPTION OF DRAWINGS

In the drawings of embodiments of the present disclosure:
Fig. 1 is a flowchart of a cell handover method provided by an embodiment of the present disclosure;
Fig. 2 is a flowchart of a cell handover method provided by an embodiment of the present disclosure;
Fig. 3 is a block diagram of a base station provided by an embodiment of the present disclosure; and
Fig. 4 is a schematic diagram of a process illustraing a handover failure due to PCI confusion in the related art.

### DETAIL DESCRIPTION OF EMBODIMENTS

In order to make those skilled in the art better understand the technical solutions of the present disclosure, a cell handover method, a base station, and a computer-readable storage medium provided by the embodiments of the present disclosure, are described in detail below with reference to the accompanying drawings.

The present disclosure is described in detail below with reference to the accompanying drawings, but the illustrated embodiments may be embodied in different forms, and the present disclosure should not be construed as limited to the embodiments set forth below. The embodiments are illustrated to make the present disclosure more thorough and complete, and for those skilled in the art more fully understanding the scope of the present disclosure.

The accompanying drawings of the embodiments of the present disclosure, which are included to provide a further understanding of the embodiments of the present disclosure and constitute a part of this specification, serve to explain the present disclosure together with the detailed description but not to limit the present disclosure. The above and other features and advantages will become more apparent to those skilled in the art, by describing the embodiments in detail with reference to the accompanying drawings.

The present disclosure may be described with reference to plan views and/or cross-sectional views by way of idealized schematic representations of the present disclosure. Accordingly, the example illustrations may be modified in accordance with manufacturing techniques and/or tolerances.

The respective embodiments of the present disclosure and the respective features in the embodiments may be combined with each other if no conflict is incurred.

The terms used in the present disclosure are for a purpose of describing particular embodiments only, but are not intended to limit the present disclosure. As used in the present disclosure, a term "and/or" includes any and all combinations of one or more of listed items. As used in the present disclosure, singular forms "a", "an" and "the" are intended to include plural forms as well (i.e., to represent at least one), unless the context clearly defines otherwise. The terms "includes/comprises" and "made of/consisted of" in the present disclosure are used to specify a presence of at least one of recited features, integers, steps, operations, elements or components, but do not preclude a presence or an addition of one or more of other features, integers, steps, operations, elements, components or groups thereof.

Unless otherwise defined, meanings of all terms (including technical terms and scientific terms) used in the present disclosure are the same as meanings commonly understood by those skilled in the art. It should further be understood that terms, such as those defined in common dictionaries, should be construed as having a meaning that is consistent with that in background of the existing art and the present disclosure, and should not be construed as having an idealized or over-formal meaning, unless expressly defined in the present disclosure.

The present disclosure is not limited to the embodiments shown in the drawings, but includes modifications of configurations based on a manufacturing process. Thus, regions illustrated in the accompanying drawings have schematic properties, and the shapes of the regions shown in the figures illustrate specific shapes of regions of elements, but are not restrictive.

In the 3GPP mobile communication system, a terminal may move to a different cell, so that it is necessary to change the cell serving the terminal as the terminal moves, that is, a cell handover is required, to ensure that a continuous communication service is provided for the terminal.

In some related technologies, a single communication indicator such as a distance between the terminal and a base station of the serving cell may be detected, and if the communication indicator reaches a preset threshold (for example, the distance between the terminal and the base station is relatively long), a cell handover instruction is sent to the terminal to start a cell handover process.

However, the cell handover process in the related art is prone to failure, which may caused by following reasons (1) to (5).

(1) An actual quality of communication between the serving cell and the terminal cannot be accurately judged through a single communication indicator (such as the distance between the terminal and the base station), so that if the serving cell sends a cell handover instruction, the communication quality may have deteriorated, and the terminal cannot receive the cell handover instruction. That is, the cell handover process starts "too late", and the handover fails.

(2) A quality of communication between a selected destination cell and the terminal in the related art is also not ensured, which may cause that the communication quality of the destination cell is not good, and the terminal cannot access the destination cell smoothly. That is, the cell handover process starts "too early".

(3) PCI (Physical Cell Identifier) confusion refers to a case where a plurality of neighboring cells have the same PCI.

In the related art, the neighboring cells in a handover measurement report from the terminal are distinguished by only the PCI, so that if PCI confusion exists, the serving cell may acquire a cell handover instruction from the destination cell, but the terminal may actually request to access another wrong neighboring cell having the same PCI as the destination cell, but the wrong neighboring cell has no relevant instance for the terminal accessing, resulting in a handover failure.

(4) Different terminals may have different requirements on the communication quality, use different protocols, have different measurement errors, or the like, and therefore a handover policy applicable to one terminal may not be applicable to another terminal. That is, the terminal may be not matched with the handover policy, resulting in a handover failure.

(5) In the related art, if the handover fails, the terminal re-accesses the original serving cell, and it is likely to still meet the condition of triggering the cell handover after the terminal accesses the original serving cell, and therefore the cell handover may be initiated again. However, the cell handover may still fail, thereby causing the cell handover to fall into a dead cycle of "trying cell handover - handover failure - accessing the original serving cell - trying cell handover", generating a plurality of handover failures in a short time, and greatly reducing the success rate of the handover and the service quality.

The embodiments of the present disclosure may be used in a cell handover process in a communication network of a 3GPP system such as LTE (Long Term Evolution) system, NR (New Radio) system, or the like.

In a first aspect, an embodiment of the present disclosure provides a cell handover method.

The method in the embodiment of the present disclosure may be used for performing a cell handover for a terminal, that is, changing a cell accessed by the terminal based on circumstances.

The method in the embodiment of the present disclosure may be performed by a server side device (for example, a base station), and certainly, the process of performing the cell handover method includes interworking with a terminal.

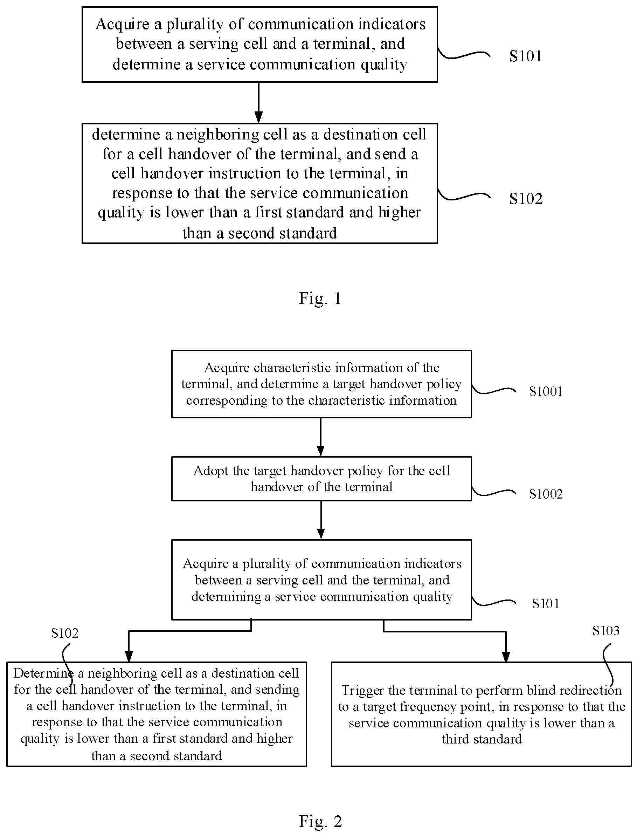

Referring to Fig. 1, the method in the embodiment of the present disclosure includes following operations S101 and S102.

At operation S101, acquiring a plurality of communication indicators between a serving cell and a terminal, to determine a service communication quality.

The service communication quality represents a quality of communication between the serving cell and the terminal.

In the cell handover method provided by the present disclosure, a plurality of communication indicators between a terminal and a cell (serving cell) that the terminal is currently connected to are detected and acquired (for example, at preset time intervals), so that an integrated quality (a service communication quality) of communication between the serving cell and the terminal is determined by referring to the plurality of communication indicators.

The serving cell is defined form the perspective of the terminal, that is, any cell that the terminal is currently connected to is the serving cell for the terminal. Therefore, serving cells of different terminals may be different, and serving cells of any terminal at different times may also be different.

The communication indicators to be detected are various, for example, include user downlink RSRP (Reference Signal Receiving Power), user downlink RSRQ (Reference Signal Receiving Quality), user downlink SINR (Signal to Interference plus Noise Ratio), user uplink PL (Path Loss), user uplink TA (Timing Advance), user uplink SINR, and the like.

The communication indicators are mostly downlink indicators, which are mainly used for ensuring that the terminal can receive a signal such as a cell handover instruction sent by the cell; the uplink indicators are mainly used to ensure that the serving cell can receive a signal such as a handover measurement report from the terminal.

It should be understood that the above communication indicators are merely exemplary, but are not a specific limitation on the communication indicators for determining the service communication quality. For example, the service communication quality may be determined by referring to a part of the above communication indicators, and also referring to other communication indicators.

At operation S102, determining a neighboring cell as a destination cell for a cell handover of the terminal, and sending a cell handover instruction to the terminal, in response to that the service communication quality is lower than a first standard and higher than a second standard.

The second standard is a standard for ensuring that the terminal can receive a signal sent by the serving cell.

The neighboring cell is defined relative to the serving cell. That is, all cells neighboring to the serving cell are neighboring cells, which are cells that the terminal may access after leaving the serving cell.

The "standard" in the present disclosure is a reference value for distinguish a high or low communication quality. If the communication quality meets the second standard, it is ensured that the terminal can receive the signal sent by the serving cell. For example, the second standard may be a minimum standard for ensuring that the terminal can receive the signal sent by the serving cell. The first standard is higher than the second standard, and therefore the communication quality that meets the first standard is better than the communication quality that just meets the second standard, and the first standard can certainly ensure that the terminal can receive the signal sent by the serving cell.

The specific forms of each "standard" are various, for example, the standard may specify: each communication indicator is expected to be higher or lower than a corresponding threshold (part of the communication indicators may be better with higher values, and part of the communication indicators may be better with lower values); or any one of the communication indicators is expected to be higher or lower than a corresponding threshold; or the plurality of communication indicators are divided into a plurality of groups, each group includes one or more communication indicators, and at least one communication indicator in each group is expected to be higher or lower than a corresponding threshold; or one or more comprehensive indicators are calculated according to the communication indicators with different weights, and the comprehensive indicator is expected to be higher or lower than a corresponding threshold; or the like.

Thus, the service communication quality being lower than the first standard indicates that the communication quality is poor and the cell handover is desired; and if the service communication quality is higher than the second standard, it is ensured that the terminal still can receive the signal from the serving cell.

Therefore, according to the cell handover method provided by the present disclosure, the service communication quality is constantly judged after being detected, and if the service communication quality is poor (lower than the first standard) but not too bad (higher than the second standard), the destination cell that the terminal is to access to is selected, and the cell handover instruction is sent to the terminal, thereby ensuring that the terminal can receive the cell handover instruction, and the cell handover can be performed in time.

In the cell handover method provided by the present disclosure, the service communication quality is determined based on the plurality of communication indicators, and compared with an approach in which a single communication indicator is used as a judgment threshold for the cell handover, the service communication quality can more accurately represent a real quality of communication between the terminal and the serving cell. Therefore, based on the service communication quality, the cell handover process can be started before the communication quality is deteriorated to possibly cause a signal transmission failure (i.e., before the service communication quality is lower than the second standard), and it can be avoided that the terminal cannot receive the cell handover instruction due to a "too late" start of the cell handover, so that the success rate of the cell handover is improved, and the service quality is improved.

In some implementations, the determining a neighboring cell as a destination cell for a cell handover of the terminal (S102) includes following operations S10211 and S10212.

At operation S10211, for each neighboring cell, acquiring a plurality of communication indicators between the neighboring cell and the terminal, to determine a neighboring cell communication quality of the neighboring cell.

The neighboring cell communication quality of the neighboring cell represents a quality of communication between the neighboring cell and the terminal.

At operation S10212, determining a neighboring cell as the destination cell for the cell handover of the terminal, based on the neighboring cell communication quality of each neighboring cell.

**In** some implementations, for each neighboring cell, a plurality of communication indicators of the neighboring cell are acquired, and based on the plurality of communication indicators, the communication quality (neighboring cell communication quality) between the neighboring cell and the terminal is determined, then based on the neighboring cell communication quality of each neighboring cell, and comprehensively considering signal strength, interference, and load of each neighboring cell, a neighboring cell is selected as the destination cell for the terminal accessing.

Therefore, the communication quality of the destination cell in the embodiment of the present disclosure can meet the expectation, the cell handover is not "too early", the terminal can interact with the destination cell successfully, and the terminal can be ensured to access the destination cell smoothly, thereby improving the success rate of the terminal accessing the destination cell.

Specific approaches of selecting the neighboring cell as the destination cell according to neighboring cell communication qualities of neighboring cells are various. For example, the neighboring cell with the highest neighboring cell communication quality in the neighboring cells may be selected as the destination cell; or the destination cell may be selected from all neighboring cells that each satisfy the expectation of the terminal on the neighboring cell communication quality of the neighboring cell, in a random mode, in a mode for ensuring load balancing, in a mode referring a history record, or the like.

The specific forms of the communication indicators for representing the neighboring cell communication quality are also various, and are not described in detail here.

In some implementations, referring to Fig. 2, after determining the service communication quality (S101), the cell handover method further includes following operation S103.

At operation S103, triggering the terminal to perform blind redirection to a target frequency point, in response to that the service communication quality is lower than a third standard.

The third standard is a minimum standard for ensuring that the terminal can receive the signal sent by the serving cell.

The third standard is a "critical minimum standard for communication quality" that ensures that the terminal can receive the signal sent by the serving cell, and therefore the terminal cannot receive the signal sent by the serving cell if the communication quality does not even meet the third standard.

For example, the third standard may be the same as the second standard. That is, if the communication quality is higher than this standard, it is ensured that the terminal can receive the signal sent by the serving cell, and if the communication quality is lower than this standard, it is not ensured that the terminal can receive the signal sent by the serving cell.

In some implementations, after determining the service communication quality by acquiring the plurality of communication indicators, the service communication quality may be poor (that is, lower than the third standard), and even if the serving cell immediately sends the cell handover instruction, it may be possible that the terminal cannot receive the cell handover instruction, and thus it may be possible that the cell handover process cannot be started. Therefore, in this case, instead of performing the cell handover, it may be actively selected to make the terminal perform blind redirection (redirection without any detection), so that the terminal is directly connected to the target frequency point, to avoid attempting the cell handover but ultimately failing.

Specific approaches of determining the target frequency point are various. For example, the target frequency point may be preset for each cell, or determined by referring to a history, or the like, and will not be described in detail here.

In some implementations, referring to Fig. 2, the cell handover method provided by the present disclosure further includes following operations S1001 and S 1002.

At operation S1001, acquiring characteristic information of the terminal, to determine a target handover policy corresponding to the characteristic information.

At operation S 1002, adopting the target handover policy for the cell handover of the terminal.

Certainly, different terminals may have different characteristics, and thus a cell handover process applicable to some terminals may be not suitable for other terminals. Therefore, the terminal accessing the cell may be identified (by determining the characteristic information) for selecting the target handover policy applicable to the terminal based on the characteristic information.

For example, a conventional handover policy may be adopted for most conventional terminals; and a special handover policy may be selected for some special terminals.

Specific approaches of determining the characteristic information of the terminal are various. For example, the terminal may be identified based on information such as IMEISV (International Mobile Equipment Identity Software Version), RFSP (Index to RAT/Frequency Selection Priority), SPID (Subscriber Profile ID for RAT/Frequency Priority), UE (User Equipment) capability, and the like.

In some implementations, the target handover policy includes at least one of: the first standard, the second standard, the cell handover instruction, and a cell handover measurement configuration.

The content related to the target handover policy may include the first standard, the second standard, the cell handover instruction, the cell handover measurement configuration, and the like. The related description may include following (1) to (4).

(1) If the characteristic information of the terminal indicates a poor communication performance, then a higher communication quality is desired for the terminal to realize communication. Therefore, a better communication quality standard, that is, a higher first standard and a higher second standard may be set for the terminal.

It should be understood that, if the communication performance of the terminal is poor, the expectation of the terminal on the communication quality of the destination cell is relatively high. Therefore, for selecting any the neighboring cell as the destination cell for the terminal based on the neighboring cell communication quality of the neighboring cell, a higher threshold standard may be configured for the neighboring cell communication quality of the neighboring cell, or an independent neighboring cell CIO (Cell Individual Offset) may be configured for the terminal.

(2) If the characteristic information of the terminal indicates that the terminal is not compatible with part of protocol cells, a special cell handover instruction can be configured for the terminal, for example, a full configuration is adopted.

(3) If the characteristic information of the terminal indicates that there is a relatively large measurement error, a special handover measurement configuration may be configured for the terminal, for example, a relatively large TTT (Time To Trigger) is configured.

(4) If the characteristic information of the terminal indicates that the handover process is abnormal and no completion message is sent, for the terminal, a redirection operation may be triggered first based on a measurement report, that is, the third standard is changed.

It should be understood that the above illustrates only part of examples of setting the corresponding handover policy based on the characteristic information of the terminal, and the characteristic information and the handover policy corresponding to the terminal are not limited thereto. For example, other handover related processes may be adjusted based on other situations of the terminal.

According to the embodiment of the present disclosure, a handover policy applicable to the terminal can be set for the terminal based on the characteristic information of the terminal, so that the failure of the cell handover caused by mismatching between the characteristics of the terminal and the handover policy is avoided, and the success rate of the handover is improved.

In some implementations, the determining a neighboring cell as a destination cell for a cell handover of the terminal (S102) includes following operations S10221 to S10224.

At operation S10221, determining a PCI (Physical Cell Identifier) of the destination cell as a destination PCI.

At operation S10222, issuing a CGI (Cell Global Identifier) measurement instruction to the terminal in response to that at least two neighboring cells have the destination PCI.

The CGI measurement instruction is configured to instruct the terminal to measure a CGI (Cell Global Identity) of the cell having the destination PCI.

At operation S10223, receiving a result CGI from the terminal.

At operation S10224, determining a neighboring cell with the destination PCI and the result CGI as the destination cell.

As above, part of cells may have the same PCI, that is, there is a PCI confusion.

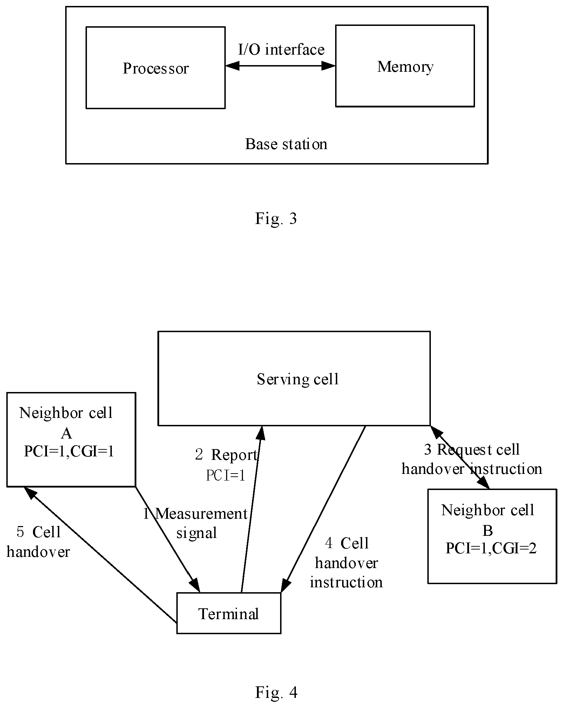

For example, referring to Fig. 4, the terminal stays in the serving cell, and neighbor cells thereof include a neighbor cell A with PCI =1 and NCGI (NR Cell Global Identifier) =1, and a neighbor cell B with PCI =1 and NCGI = 2. In the related art, during performing the cell handover, the terminal is not in the coverage of the neighboring cell B, and therefore only the signal of the neighboring cell A with NCGI =1 is measured. Accordingly, the handover measurement report from the terminal includes only the information of PCI =1 (actually for the neighboring cell A). The serving cell may actually determine, based on the information of PCI =1, the neighboring cell B with PCI =1 and NCGI =2 as the destination cell, and acquires the cell handover instruction from the neighboring cell B, and then issues the cell handover instruction to the terminal. However, since only the signal of the neighboring cell A with NCGI =1 is available at the terminal, the terminal will use the cell handover instruction from the neighboring cell B with NCGI =2 to trigger the cell handover process to the neighboring cell A, thereby causing a failure of the cell handover.

In the cell handover method provided by the present disclosure, the base station collects in advance a situation of PCI confusion in its subordinate cells, for example, checking configuration information of the neighboring cells, measuring the air interface CGI, or performing manual configuration, or the like, which will not be described in detail herein.

Therefore, if the destination cell selected by the serving cell is related to PCI confusion (that is, at least one another neighboring cell has the same PCI as the destination cell, that is, has the destination PCI), the serving cell issues a CGI measurement instruction to the terminal to instruct the terminal to perform CGI measurement on at least the cell having the destination PCI, and receives a result CGI from the terminal, to determine the neighboring cell having both the destination PCI and the result CGI as the destination cell.

For example, in the case of Fig. 4, if the serving cell selects the neighboring cell B with PCI =1 as the destination cell, the CGI measurement for the cell with PCI =1 may be issued to the terminal, and the measurement result from the terminal is NCGI =1 of the neighboring cell A (since the terminal is not in the coverage of the cell with NCGI = 2), so that the serving cell can determine the neighboring cell A with PCI =1 and NCGI =1 as the destination cell based on the information of NCGI =1, and request the cell handover instruction from the cell A with PCI =1 and NCGI =1 and send the cell handover instruction to the terminal.

In some implementations, the cell handover method provided by the present disclosure further includes following operations S1041 to S1043.

At operation S1041, acquiring an identifier of each terminal accessing each cell.

At operation S 1042, recording a number of times of each terminal accessing each cell, based on the identifier.

At operation S1043, prohibiting the terminal from performing any cell handover within a second preset time, in response to that the number of times of the terminal accessing any cell within a first preset time exceeds a handover threshold.

As above, if a cell handover fails, the terminal may re-access the original serving cell, but the original serving cell will try again to make the terminal perform a cell handover, so that a cycle of handover and failure is generated.

In the cell handover method provided by the present disclosure, if a terminal accesses any cell, the cell acquires an identifier which can represent the identity of the terminal, and records the number of times of the terminal accessing based on the identifier; thus, if it is found that any certain terminal have accessed the same cell for multiple times within a short time (e.g., a first preset time) (that is, the times of accessing exceed the handover threshold), it may be considered that the terminal repeatedly accesses the cell for a cell handover for some reasons, and thus the cell handover of the terminal may be temporarily prohibited (a handover punishment is performed on the terminal) within a certain time (e.g., a second preset time), and a large amount of handover failures within a short time can be avoided.

In some implementations, the acquiring an identifier of each terminal accessing each cell (S1041) includes following operations S104111 and S104112.

At operation S104111, receiving an access request from the terminal.

The access request carries identification information of the terminal.

At operation S104112, determining the identifier of the terminal according to the identification information.

In some implementations, an access request message sent by the terminal to a source base station carries identification information of the terminal, so that the identifier of the terminal accessing can be determined based on the identification information.

For example, the identification information of the terminal may be S-TMSI (System Architecture Evolution-Temporal Mobile Subscriber Identity), or the like.

The S-TMSI may be updated along with the terminal initiating a process such as TAU (Tracking Area location Update), and therefore S-TMSIs carried by access request messages for the terminal accessing the cell for multiple times may be the same or may be different following a certain rule (for example, N S-TMSIs are used alternately), so that the cell should uniformly identify the S-TMSIs actually corresponding to one terminal as one identifier, for example, the S-TMSIs are to be combined or merged based on the rule. Alternatively, any protocol cell may be modified to expect the terminal to carry both the current S-TMSI and the S-TMSI (old S-TMSI) before being update last in the access request message, so that the cell can associate all the S-TMSIs of one terminal together based on each old S-TMSI.

In some implementations, the acquiring an identifier of each terminal accessing each cell (S1041) includes following operations S104121 and S104122.

At operation S104121, receiving a context establishment request sent by a core network, after the terminal accesses the cell.

The context establishment request carries identification information of the terminal.

At operation S104122, determining the identifier of the terminal based on the identification information.

In some implementations, the identifier of the terminal may be determined based on the identification information in the context establishment request of the core network, after the terminal accesses successful.

For example, the identifier may be a core network ID (identifier), for example, in a 5G (fifth generation mobile communication network) network, the core network ID may be an AMF (Access and Mobility management Function) UE NGAP (NG Application Protocol) ID, which is abbreviated as NGAP ID.

After the terminal initiates accessing to the source base station and accesses sucessfully, an initial context establishment request of the core network may carry the NGAP ID of the terminal.

As metioned before, NGAP IDs for the terminal accessing for multiple times may be the same, or may be different following a certain rule (for example, N NGAP IDs may be used alternately), so that the cell should uniformly identify the NGAP IDs actually corresponding to one terminal as one identifier, for example, the NGAP IDs are combined or merged based on the rule. Alternatively, any protocol cell may be modified, such that the current NGAP ID and the last NGAP ID (old NGAP ID) are both carried in the initial context establishment request, thereby the cell can associate all the NGAP IDs of one terminal together based on each old NGAP ID.

In a second aspect, referring to Fig. 3, an embodiment of the present disclosure provides a base station, including at least one memory, and at least one processor; the memory stores a computer program to be executed by the at least one processor, the computer program, when executed by the at least one processor, causes the at least one processor to implement the cell handover method provided by the present disclosure.

In a third aspect, an embodiment of the present disclosure provides a computer-readable storage medium, storing thereon a computer program, which, when executed by a processor, causes the processor to implement the cell handover method provided by the present disclosure.

The processor is a device having a capability of processing data, includes, but is not limited to, a Central Processing Unit (CPU), and the like; the memory is a device having a capability of storing data, includes, but is not limited to, a random access memory (RAM, in particular, SDRAM, DDR, and the like), a read only memory (ROM), an electrically erasable programmable read only memory (EEPROM), and a FLASH; an I/O interface is connected between the processor and the memory, to implement information interaction between the memory and the processor, includes, but is not limited to, a data Bus, and the like.

It should be understood by those skilled in the art that all or some of the operations, and the functional modules/components in the system and the apparatus, disclosed above may be implemented as software, firmware, hardware, or suitable combinations thereof.

In a hardware implementation, the division between the functional modules/components stated above does not correspond to the division of physical components; for example, one physical component may have a plurality of functions, or one function or operation may be performed through a cooperation of several physical components.

Some or all of the physical components may be implemented as software executed by a processor, such as a central processing unit (CPU), a digital signal processor or a microprocessor, or may be implemented as hardware, or may be implemented as an integrated circuit, such as an application specific integrated circuit. Such software may be distributed on a computer-readable medium, the computer-readable medium may include computer storage medium (or non-transitory medium) and communication medium (or transitory medium). The computer storage medium includes volatile/nonvolatile or removable/non-removable medium used in any method or technology for storing information (such as computer-readable instructions, data structures, program modules and other data). The computer storage medium includes, but is not limited to, a Random Access Memory (RAM, more specifically SDRAM, DDR, or the like), a Read-Only Memory (ROM), an Electrically Erasable Programmable Read-Only Memory (EEPROM), a flash memory (FLASH) or other disk storages, a Compact Disc Read-Only Memory (CD-ROM), a Digital Video Disk (DVD) or other optical discs, magnetic cassettes, magnetic tapes, magnetic disks or other magnetic storages, or any other medium which can be used to store the desired information and can be accessed by a computer. The communication medium generally includes computer-readable instructions, data structures, program modules or other data in a modulated data signal, such as a carrier wave or other transmission mechanism, and may include any information delivery medium.

The exemplary embodiments have been disclosed herein, and although specific terms are employed, they are used and should only be interpreted in a generic and descriptive meaning but not for purposes of a limitation. It is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present disclosure as set forth in the appended claims.

## Claims

1. A cell handover method, comprising:
acquiring a plurality of communication indicators between a serving cell and a terminal, to determine a service communication quality, the service communication quality representing a quality of communication between the serving cell and the terminal; and
determining a neighboring cell as a destination cell for a cell handover of the terminal, and sending a cell handover instruction to the terminal, in response to that the service communication quality is lower than a first standard and higher than a second standard, the second standard being a standard for ensuring a signal sent by the serving cell to be receivable by the terminal.

2. The method of claim 1, wherein the determining a neighboring cell as a destination cell for a cell handover of the terminal, comprises:
for each neighboring cell, acquiring a plurality of communication indicators between the neighboring cell and the terminal, to determine a neighboring cell communication quality of the neighboring cell, the neighboring cell communication quality of the neighboring cell representing a quality of communication between the neighboring cell and the terminal; and
determining a neighboring cell as the destination cell for the cell handover of the terminal, based on the neighboring cell communication quality of each neighboring cell.

3. The method of claim 1, further comprising:
after the service communication quality is determined, triggering the terminal to perform blind redirection to a target frequency point, in response to that the service communication quality is lower than a third standard, the third standard being a minimum standard for ensuring the signal sent by the serving cell to be receivable by the terminal.

4. The method of claim 1, further comprising:
acquiring characteristic information of the terminal, to determine a target handover policy corresponding to the characteristic information; and
adopting the target handover policy for the cell handover of the terminal.

5. The method of claim 4, wherein the target handover policy comprises at least one of:
the first standard, the second standard, the cell handover instruction, or a cell handover measurement configuration.

6. The method of claim 1, wherein the determining a neighboring cell as a destination cell for a cell handover of the terminal, comprises:
determining a Physical Cell Identity (PCI) of the destination cell as a destination PCI;
issuing a Cell Global Identifier (CGI) measurement instruction to the terminal in response to that at least two neighboring cells have the destination PCI, the CGI measurement instruction being configured to instruct the terminal to measure a Cell Global Identity (CGI) of the neighboring cell with the destination PCI;
receiving a result CGI from the terminal; and
determining the neighboring cell with the destination PCI and the resulting CGI as the destination cell.

7. The method of claim 1, further comprising:
acquiring an identifier of each terminal accessing each cell;
recording a number of times of each terminal accessing each cell, based on the identifier; and
prohibiting the terminal from performing the cell handover within a second preset time, in response to that the number of times of the terminal accessing any cell within a first preset time exceeds a handover threshold.

8. The method of claim 7, wherein the acquiring an identifier of each terminal accessing each cell, comprises:
receiving an access request from the terminal, the access request carrying identification information of the terminal; and
determining the identifier of the terminal based on the identification information.

9. The method of claim 7, wherein the acquiring an identifier of each terminal accessing each cell, comprises:
receiving a context establishment request sent by a core network, after the terminal accesses the cell, the context establishment request carrying identification information of the terminal; and
determining the identifier of the terminal based on the identification information.

10. A base station, comprising at least one memory, and at least one processor; the memory stores a computer program to be executed by the at least one processor, the computer program, when executed by the at least one processor, causes the at least one processor to implement the cell handover method of any one of claims 1 to 9.

11. A computer-readable storage medium, storing thereon a computer program, which, when executed by a processor, causes the processor to implement the cell handover method of any one of claims 1 to 9.
